(19) Europäisches Patentamt
European Patent Office
Office européen des brevets

(11) **EP 1 086 847 A2**

(12) **EUROPEAN PATENT APPLICATION**

(43) Date of publication:
28.03.2001 Bulletin 2001/13

(51) Int. Cl.⁷: **B60L 11/18**

(21) Application number: 00120677.0

(22) Date of filing: 21.09.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 21.09.1999 JP 26731999

(71) Applicant:
**YAMAHA HATSUDOKI KABUSHIKI KAISHA**
**Iwata-shi Shizuoka-ken (JP)**

(72) Inventors:
• **Mizuno, Yutaka,**
**Yamaha Hatsudoki K.K.**
**Iwata-shi, Shizuoka-ken (JP)**

• **Kuranishi, Masahisa,**
**Yamaha Hatsudoki K.K.**
**Iwata-shi, Shizuoka-ken (JP)**
• **Saito, Mikio,**
**Yamaha Hatsudoki K.K.**
**Iwata-shi, Shizuoka-ken (JP)**
• **Yamada, Toshiaki,**
**Yamaha Hatsudoki K.K.**
**Iwata-shi, Shizuoka-ken (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Power source control method for a hybrid-driven mobile body**

(57)    A power source control method for a hybrid-driven mobile body comprising a motor type power system for travelling, and a fuel cell and a secondary battery as power sources for supplying electric power in response to load of said power system. To a varying load, electric power corresponding to a base load portion at a given level and with a substantially small variation is supplied from the fuel cell and electric power corresponding to a varying load portion is supplied from the secondary battery.

[FIG. 3]

EP 1 086 847 A2

**Description**

This invention relates to a power source control method for a hybrid-driven mobile body comprising a motor type power system for travelling, and a fuel cell and a secondary battery as power sources for supplying electric power in response to load of said power system which may be applied to vehicles, watercrafts, or the like, and particularly to a power source control method for a hybrid-driven mobile body with a fuel cell and a secondary battery as power sources.

A hybrid type motor-powered vehicle has been developed for the purpose of reducing pollution due to vehicles in which an electric motor is used for driving the vehicle, and two kinds of devices are provided and combined as power sources of the vehicle, one of which is a secondary battery (battery), such as a lead battery, capable of supplying electric power to the electric motor in quick response to load change, as well as of charging, and the other of which is a fuel cell adapted to use easily-supplied fuel and having low pollution properties. Regarding such a hybrid-driven vehicle, two types of fuel cells are contemplated, one of which uses hydrogen gas in a hydrogen gas reservoir as fuel, and the other of which uses hydrogen gas generated in a reformer, with methanol, methane or butane as primary fuel.

In such a hybrid-driven vehicle, a vehicle controller is provided for drivingly controlling the motor in an optimum condition by supplying electric power efficiently according to the operating conditions after switching on of the power source. Modules constituting the equipment such as a motor, a fuel cell and a battery are provided with sensors for detecting data, such as temperature, rpm or a state of voltages and currents, corresponding to the modules necessary for drive control of the vehicle, respectively, and the vehicle controller calculates required electric power or expected travel distance according to the detected output, for control of charging/discharging the battery, output of the fuel cell, or motor driving.

In the hybrid-driven vehicle described above, especially in a small vehicle such as a motor bicycle, load variation (required load due to manipulation of accelerator, or changes in external load due to slope or irregularities of the road) to the motor is great, and quick response is required.

However, the fuel cell, if using pure hydrogen in the hydrogen reservoir, may cause delayed response due to inertia of the hydrogen gas flow, or pulsation in the short-time variation of the hydrogen gas flow, with unstable output, and if using reformed hydrogen, it is unable to increase the output immediately at the time of starting or sudden load increase because of poor response of the reformer, with the result that the quick response power characteristics might not be achieved.

Therefore, it is contemplated that electric power is supplied at the time of sudden load increase by a hybrid system with a battery to cope with the delayed response of the fuel cell, but while the output of the fuel cell is being raised, load to the battery becomes excessive, so that the battery capacity may fall abruptly, raising a problem of failing of ensuring necessary travel distance or shorter battery life.

Therefore, it is an objective of this invention to provide a power source control method for a hybrid-driven mobile body capable of coping with load change by making proper use of power sources according to the characteristics of a fuel cell and a battery, ensuring a stable running, and preventing capacity shortage and deterioration of the battery.

In order to achieve the foregoing object, in this invention is provided a power source control method for a hybrid-driven mobile body comprising a motor type power system for travelling, and a fuel cell and a secondary battery as power sources for supplying electric power in response to load of said power system, wherein to a varying load, electric power corresponding to a base load portion at a given level and with a substantially small variation is supplied from the fuel cell and electric power corresponding to a varying load portion is supplied from the secondary battery.

According to this arrangement, the fuel cell constantly bears a load of a given level as a base load portion, and the secondary battery (battery) bears a varying load portion exceeding the base load portion. Therefore, electric power is supplied from the fuel cell with constant stability for the base load portion which is constant or varies slowly according to the operating mode, while electric power is supplied from the battery for the finely varying load portion exceeding the base load portion, thereby decreasing burden of the battery, preventing abrupt capacity drop or deterioration of the battery, and ensuring stable running by sharing the whole load efficiently between the fuel cell and the battery.

In a preferred arrangement, the base load portion is increased when the capacity of the secondary battery is smaller than a specified value, and the base load portion is decreased when the capacity is larger than a specified value.

According to this arrangement, the remaining capacity of the secondary battery is metered, and if the remaining capacity is smaller than a specified value, the base load portion is raised to increase power supply by the fuel cell beyond the actual load so as to charge the battery, while if the remaining capacity is larger than a specified value, the base load portion is lowered to decrease power supply by the fuel cell and to increase the battery load share so as to discharge the battery, so that the capacity of the battery is maintained in a proper condition.

In another preferred arrangement, electric power is supplied continuously from the fuel cell after stoppage of travelling.

According to this arrangement, power generation by the fuel cell continues when the mobile body stops running temporarily, so that the battery can be charged, ensuring a stable driving after starting.

Other preferred embodiments of the present invention are laid down in further dependent claims.

In the following, the present invention is explained in greater detail with respect to several embodiments thereof in conjunction with the accompanying drawings, wherein:

Fig. 1 is a view of external appearance of a hybrid-driven vehicle according to an embodiment of this invention;

Fig. 2 shows structural views of a hybrid-driven vehicle according to another embodiment of this invention;

Fig. 3 is block diagram of the control system of the hybrid-driven vehicle according to the embodiment of this invention;

Fig. 4 is a structural diagram of a portion of a fuel cell unit according to this invention;

Fig. 5 is a structural diagram of the power source control system according to this invention;

Fig. 6 is an illustration of the control system of the hybrid-driven vehicle according to this invention;

Fig. 7 is a flowchart of the control operation of the whole vehicle by a vehicle controller according to the embodiment of this invention;

Fig. 8 is flowchart showing steps continued from the flowchart of Fig. 7;

Fig. 9 is a flowchart of the operation control of a fuel cell according to this invention;

Fig. 10 is a graph, illustrating burden ratios of a power source in a power source control method for a motor-powered vehicle according to an embodiment of the invention;

Fig.11 is a flow chart for the power source control method according to the invention;

Fig.12 is a graph, showing the change of battery capacity in Fig.11;

Fig.13 is a graph, showing the change of battery capacity in the power source control method of the invention;

Fig.14 is a graph, showing patterns of load change according to another embodiment of the invention;

Fig.15 is a flow chart, showing a subroutine of generation control for determining a temporary stoppage and charging the battery;

Fig.16 is a graph, showing the change of the battery capacity during temporary stoppage; and

Fig.17 is a flow chart of another embodiment of the invention.

Now, an embodiment of this invention will be described below with reference to the drawings.

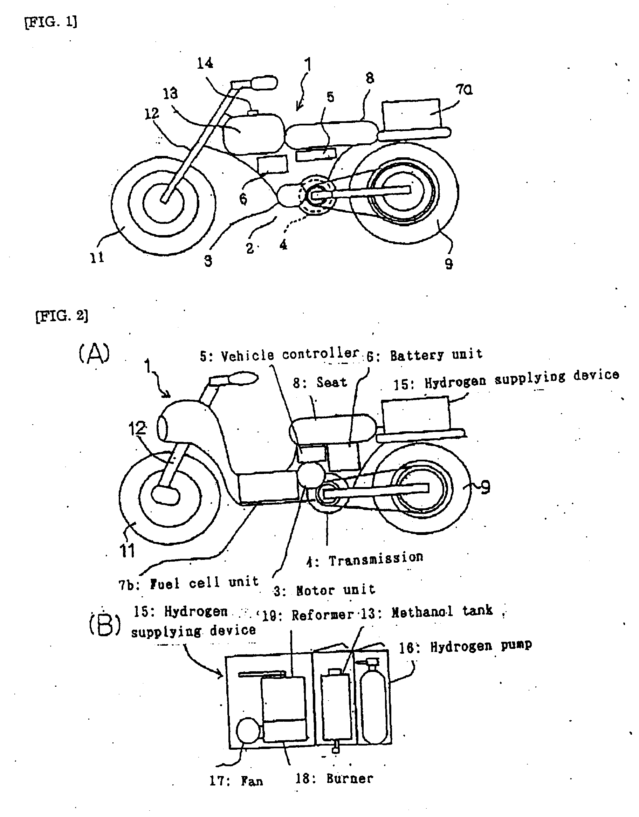

Fig. 1 is a general structural view of a hybrid-driven vehicle according to an embodiment of this invention. The hybrid-driven vehicle 1 of this embodiment is applied to a motor bicycle. The hybrid-driven vehicle 1 is provided with a hybrid-driven system 2. The hybrid-driven system 2 comprises an electric motor unit 3, a transmission 4, a vehicle controller 5, a battery unit 6 and a fuel cell unit 7.

A fuel cell sub-unit 7a comprised mainly of a fuel cell and a reformer, is disposed rearwardly of a seat 8 and upwardly of a drive wheel 9. In front of the seat 8 and between the seat and a front fork 12 for steering a steering wheel 11, is disposed a methanol tank 13. The methanol tank 13 is provided with a filler cap 14.

The hybrid system comprised of a fuel cell in the fuel cell sub-unit 7a and a battery in the battery unit 6 is adapted to drive an electric motor in the electric motor unit 3 to rotate the drive wheel 9.

In Fig. 1, the fuel cell sub-unit comprised mainly of a fuel cell body and the reformer may be disposed at a position shown by numeral 13, and the methanol tank, at a position shown by numeral 7.

Fig. 2(A) is a view of an example of another type of hybrid-driven motor bicycle, and Fig. 2(B) is a structural view of a hydrogen supplying device for the fuel cell.

The hybrid-driven vehicle 1 has a vehicle controller 5 and a battery unit 6 under a seat 8; under a vehicle controller 5 is provided an electric motor unit 3; and in front thereof is provided a fuel cell sub-unit 7b comprised mainly of a fuel cell. On a carrier to the rear of the seat 8 is provided a hydrogen supplying device 15 for supplying hydrogen for power generation to the fuel cell sub-unit 7b.

The hydrogen supplying device 15, as shown in Fig. 2(B), is provided with a hydrogen bombe 16 together with a methanol tank 13, and with a fan 17 and a burner 18 for supplying combustion air, and further with a reformer 19 for producing hydrogen through catalyst, with primary fuel being heated and vaporized.

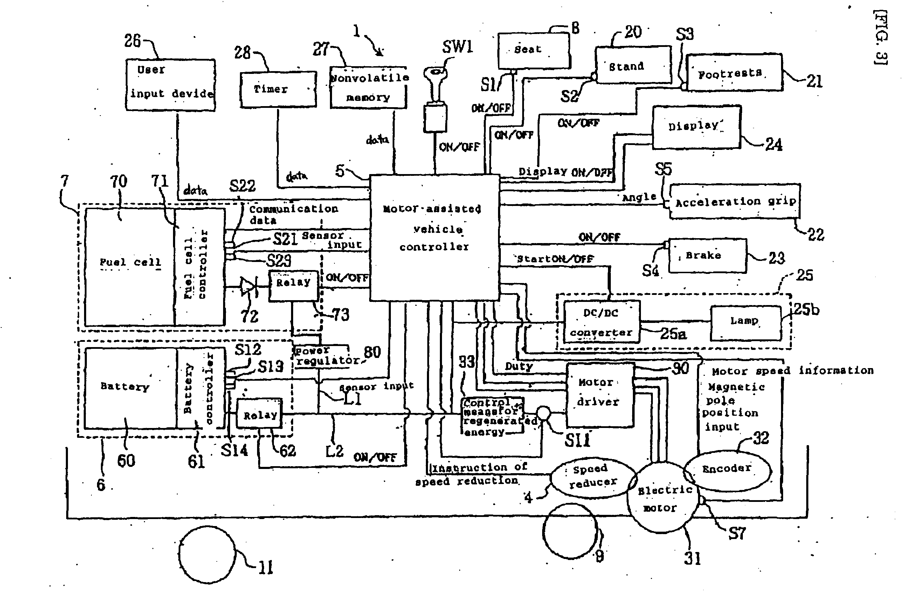

Fig. 3 is a schematic block diagram to the whole of the power transmission system and the control system mounted on the hybrid-driven vehicle according to this invention.

The hybrid-driven vehicle 1 is provided with a main switch SW1, a seat 8, a stand 20, a foot rest 21, an acceleration grip 22, a brake 23, an indicator 24, a lamp unit 25 including a light, a winker, etc, a user input device 26, a non-volatile memory 27 and a timer 28, and further with an electric motor unit 3, a transmission 4, a vehicle controller 5, a battery unit 6 and a fuel cell unit 7.

ON/OFF signals are sent from the main switch SW1 to the vehicle controller 5 to drive the motor-powered vehicle. To the seat 8, stand 20, foot rest 21 and brake 23 are fitted sensors S1-S4, respectively, and ON/OFF signals are sent from these sensors S1-S4 to the vehicle controller 5, where the respective operating conditions are detected.

The accelerator grip 22 constitutes output setting means, and to the accelerator grip 22 is fitted an accelerator opening sensor S5, from which signals of accelerator opening are sent to the vehicle controller 5 through gripping manipulation of the driver. The electric motor is controlled according to accelerator opening. The vehicle controller 5 constitutes control means for controlling the output of the electric motor based on the output setting value from the output setting means constituted by the accelerator grip 22.

The driver is able to input various data from a user input device 26 to the vehicle controller 5 to change, for example, the operating characteristics of the vehicle. Also, data are transferred between the non-volatile memory 27 and timer 28 and the vehicle controller 5, that is, to the non-volatile memory 27 is stored the information of the operating conditions of the vehicle at the time of stoppage, and the vehicle controller 5 reads the information of the stored operating conditions for control when operation is started.

The indicator 24 is driven by indicator-ON/OFF signals from the vehicle controller 5 and the operating conditions of the motor-powered vehicle are indicated on the indicator 24. The lamp unit 25 including a light, winker, etc is comprised of lamps 25b of the light, winker, etc. Activation-ON/OFF signals from the vehicle controller 5 drive a DC/DC converter 25a to light the lamps 25b.

The electric motor unit 3 is provided with a motor driver 30, an electric motor 31 connected to the drive wheel 9, an encoder 32, a regenerative current sensor S11 and regenerative energy control means 33. The motor driver 30 controls the electric motor 31 through duty signals from the vehicle controller 5, and the drive wheel 9 is driven by the output of the electric motor 31. The encoder 32 detects the position of the magnetic poles and the number of revolution of the electric motor 31. Information of the motor speed from the encoder 32 is stored in a memory in the motor driver 30 to be sent to the vehicle controller 5 as required. Output of the electric motor 31 is changed in its speed by the transmission 4 to drive the drive wheel 9, and the transmission 4 is controlled by speed-change command signals from the vehicle controller 5. The electric motor 31 is provided with a motor voltage sensor or a motor current sensor S7, and information of the voltages and currents of the motor is stored in a memory in the motor driver to be sent to the vehicle controller 5 as required.

The battery unit 6 is provided with a battery 60, a battery controller 61 and a battery relay 62. The fuel cell unit 7 is provided with a fuel cell 70 constituting power generating means, a fuel cell controller 71, a reverse current prevention element 72 and a fuel cell relay 73. There provided are a first power supply path L1 allowing supply of the output current from the fuel cell 70 to the battery 60 and a second power supply path L2 allowing supply of the output current from the battery 60 to the electric motor 31, and electric power is supplied through an electric power regulating section 80.

The battery controller 61 is provided with detection means for detecting the charging state of the battery 60, and the detection means is comprised of a battery temperature sensor S12, a battery voltage sensor S13 and a battery current sensor S14, and information from these sensors is stored in a memory in the battery controller 61 to be entered in the vehicle controller 5 as required. The battery relay 62 is activated by ON/OFF signals from the vehicle controller 5 to control electric power supply from the second power supply path L2.

Communication data are sent from the vehicle controller 5 to the fuel cell controller 71, and the fuel cell controller 71 controls the fuel cell 70 on the basis of these data. The fuel cell controller 71 is provided with detection means for detecting the state of the fuel cell 70. The detection means is comprised of various temperature sensors S21, a fuel cell voltage sensor S22 and a fuel cell current sensor S23, and information from these sensors is stored in a memory in the fuel cell controller 71 to be entered in the vehicle controller 5 as required. The fuel cell relay 73 connected to the fuel cell controller through rectifier diode (reverse current prevention element) 72 is activated by ON/OFF signals from the vehicle controller 5 to control electric power supply from the first power supply path L1.

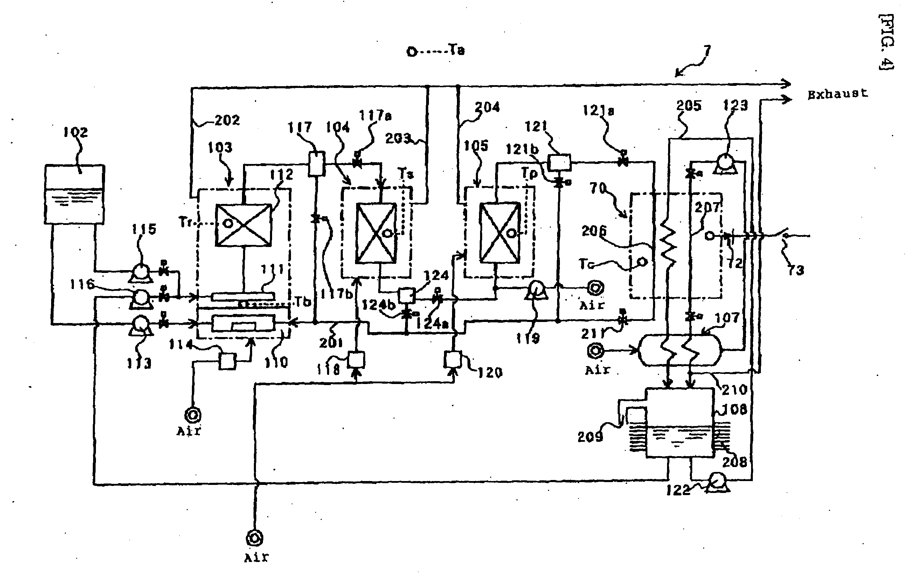

Fig. 4 is a structural diagram of a portion of a fuel cell according to an embodiment of this invention.

The fuel cell unit 7 in this embodiment comprises a methanol tank 102, a reformer 103, a shift converter 104, a selective oxidation reactor 105, a fuel cell 70, a moisture collecting heat exchanger 107, a water tank 108 and a fuel cell battery controller 71, various devices such as valves, pumps and fans, and sensors. The fuel cell controller 71 is connected to the devices such as valves, pumps and fans, and sensors. The reformer 103, shift converter 104, selective oxidation reactor 105 and fuel cell 70 are provided with temperature sensors Tr, Tb, Ts, Tp, Tc, and the temperature of these components is controlled properly by the fuel cell battery controller 71 (Fig. 3) through temperature detection.

The reformer 103 is provided with a burner 110, an evaporator 111 and a catalyst layer 112. To the burner 110 is supplied methanol from the methanol tank 102 by a burner pump 113 activated through temperature detection by the temperature sensor Tb, and air by a burner fan 114, and the evaporator 111 is heated by combustion action of the mixture. The double circle in the figure represents an air inlet. To the evaporator 111 is supplied methanol fed from the methanol tank 102 by the methanol pump 115, and water fed from the water tank 108 by the water pump 116, with methanol and water mixed together. The burner 110 heats the evaporator 111 to vaporize the fuel mixture of methanol and water, and the vaporized fuel mixture in the evaporator 111 is supplied to the catalyst layer 112.

To the burner 110 is supplied surplus (or bypassing) hydrogen from the fuel cell 70 through a line 201 for combustion. The combustion heat of the burner 110 vaporizes primary fuel (raw material) composed of methanol and water, and heats the catalyst layer 112 to maintain its temperature at a value required for catalytic reaction. Combustion gas, and air not involved in the reaction are discharged to the outside through an exhaust passage 202.

The catalyst layer 112 is made, for example, of Cu-base catalyst, and resolves the mixture of methanol and water into hydrogen and carbon dioxide at a catalyst reaction temperature of about 300 °C as follows:

$$CH_3OH + H_2O \rightarrow 3H_2 + CO_2$$

In the catalyst layer, a very small amount (about 1%) of carbon monoxide is produced:

$$CH_3OH \rightarrow 2H_2 + CO$$

Since this CO is adsorbed by catalyst in the cell 70 and lowers electromotive force reaction, its concentration is lowered in the shift converter 104 and the selective oxidation reactor 105 on the latter stage, and in the cell 70, to the order of one thousand to some tens of ppm.

In the shift converter 104, carbon monoxide in the resolved gas is turned to CO2 at a reaction temperature of about 200 °C in the following chemical reaction by surplus water vapor:

$$CO + H_2O \rightarrow H_2 + CO_2$$

and CO concentration is lowered to the order of about 0.1%.

In the selective oxidation reactor 105, CO is further changed chemically to CO2 at a catalyst temperature of about 120 °C using platinum-base catalyst in the oxidation reaction as:

$$2CO + O_2 \rightarrow 2CO_2$$

and its concentration is reduced further to 1/10 of the previous value or smaller. Thus, the CO concentration in the cell 70 can be lowered to the order of some tens of ppm.

The reformer 103 allows raw material to be reformed so as to produce hydrogen as described above, and the hydrogen acquired is supplied to the fuel cell 70 through the shift converter 104 and the selective oxidation reactor 105. Between the reformer 103 and the shift converter 104 are provided a buffer tank 117 for absorbing pulsation and pressure change and switching valves 117a, 117b, and the hydrogen is returned to the burner 110 through activation of these switching valves 117a, 117b. The shift converter 104 is cooled by a cooling fan 118 after temperature detection by the temperature sensor Ts. Cooling air is discharged to the outside through an exhaust passage 203.

Between the shift converter 104 and the selective oxidation reactor 105 are provided a buffer tank 124 and switching valves 124a, 124b, and hydrogen is returned to the burner 110 through activation of these switching valves.

Hydrogen sent from the shift converter 104 is mixed with air fed by a reaction air pump 119 to be supplied to the selective oxidation reactor 105. The selective oxidation reactor 105 is cooled by a cooling fan 120 after temperature detection by the temperature sensor Tp. The cooling air is discharged to the outside through an exhaust passage 204.

Between the selective oxidation reactor 105 and the fuel cell 70 are provided a buffer tank 121 and switching valves 121a, 121b, and hydrogen is returned to the burner 110 in the reformer 103 through activation of these switching valves.

As a result of flow control of the switching valves 117a, 117b to the shift converter 104, that of the switching valves 124a, 124b to the selective oxidation reactor 105 and that of the switching valves 121a, 121b to the fuel cell 70, the amount of hydrogen supplied to the fuel cell 70 can be regulated for output control. Excessive oxygen is supplied in this case, so that output is controlled according to the amount of hydrogen.

Such an output control is performed as follows: required output is calculated by the vehicle controller 5 based on the data from sensors S21-S23 and the detected data of the operating conditions from other various sensors, the flow rate of each switching valve is calculated by the vehicle controller 5 or the fuel cell controller 71 based on the calculation results, taking account of the time lag required for the hydrogen quantity in the cell to be changed after activation of the switching valve, on the basis of which ON/OFF control or opening control of each switching valve is performed by the fuel cell controller 71. In this case, a larger supply quantity of the primary fuel such as methanol may increase the amount of evaporation of hydrogen to thereby increase output, in which case time lag is produced by the time hydrogen is increased in quantity enough to participate in power generation. Such a time lag is compensated for by the electric power from the battery.

To the fuel cell 70 is supplied water from the water tank 108 by a cooling and humidifying pump 122, and air is supplied from the moisture collection heat exchanger 107 by a pressurizing air pump 123 through temperature detection of the temperature sensor Tc. Using the water, air and hydrogen, power generation is performed in the fuel cell 70, as described below.

The fuel cell 70 is configured such that electrodes are each formed with, for example, a platinum-base porous catalyst layer (not shown) provided on both sides of a cell film (not shown) with a cooling and humidifying water passage 205 formed therein. To one electrode is supplied hydrogen from the selective oxidation reactor 105 through a hydrogen passage 206, and to the other electrode, oxygen (air) through an oxygen passage 207. Hydrogen ions move from the hydrogen passage 205 of the hydrogen side electrode to the oxygen side electrode through the cell film and are combined with oxygen to form water. The migration of electrons (-) associated with the migration of the hydrogen ions (+) allows an electric current to flow between the electrodes for power generation.

This power generating reactor is a heat development reactor, and for the purpose of cooling and smooth migration of hydrogen ions to the oxygen side electrode, water is supplied from the water tank 108 to the water passage 205 in the cell film between both electrodes by the pump 122. The water which has passed through the water passage 205 and increase in temperature, exchanges heat with air in the heat exchanger 107 and returns to the water tank 108. The water tank 108 is provided with a radiation fins 208 for cooling water. Numeral 20 designates an overflow pipe.

Air is introduced to the heat exchanger 107. The air, after exchanging heat with water at an elevated temperature, is turned to a hot air, and supplied to the oxygen passage 207 by the air pump 123. As a result of the hot air being supplied, combining reaction with hydrogen ions is accelerated, providing effective electromotive force reaction. Therefore, an air inlet (shown in the figure by a double circle) is preferably provided in the vicinity of the selective oxidation reactor 105 or the catalyst layer 112 where the foregoing high temperature catalytic reaction takes place.

Oxygen in the air passing through the oxygen passage 207 and combined with hydrogen ions is turned into water and collected in the water tank 108. The surplus air (oxygen and nitrogen) is discharged to the outside through an exhaust passage 210.

Water used in the fuel cell 70 and water produced by power generation as described above, exchange heat with cooling air in the moisture collecting heat exchanger 107 and is returned to the water tank 108. Also, the surplus hydrogen used for power generation in the fuel cell 70 is returned to the burner 110 of the reformer 103 through a valve 211 and a line 201.

As described above, in the fuel cell unit 7, by means of the reformer 103 in which the evaporator 111 is heated by the burner 110 and raw material vaporized by the evaporator 111 is supplied to the catalyst layer 112, the raw material is reformed to produce hydrogen, and the hydrogen acquired is supplied to the fuel cell 70 through the shift converter 104 and the selective oxidation reactor 105 for power generation. In this case, hydrogen acquired from the selective oxygen reactor 105 may be stored, as shown in Fig. 2(B), temporarily in the hydrogen bombe 16.

The output of the fuel cell 70, as shown in Fig. 3, is connected to the power regulating section 80 through the reverse current prevention element 72 and the fuel cell battery relay 73, and the power regulating section 80 is connected to the battery 60 and the electric motor 31.

Although, in the foregoing embodiments a reformer 103, a shift converter 104, a selective oxidation reactor 105, etc are used for producing hydrogen gas with methanol as a row material, any one of gasoline, methane and butane may be held in a tank and a reformer 103 carrying catalyst corresponding to the raw material, a shift converter 104, a selective oxidation reactor 105, etc, may be used to produce hydrogen gas for the fuel cell 70. In addition, a fuel cell unit 7 may be comprised mainly of a fuel cell and a hydrogen gas bombe containing a hydrogen-gas storing alloy, and this hydrogen bombe may be mounted exchangeably on the fuel cell unit 7. In this case, the hydrogen bombe is filled with hydrogen gas of high purity produced for industrial use in a factory.

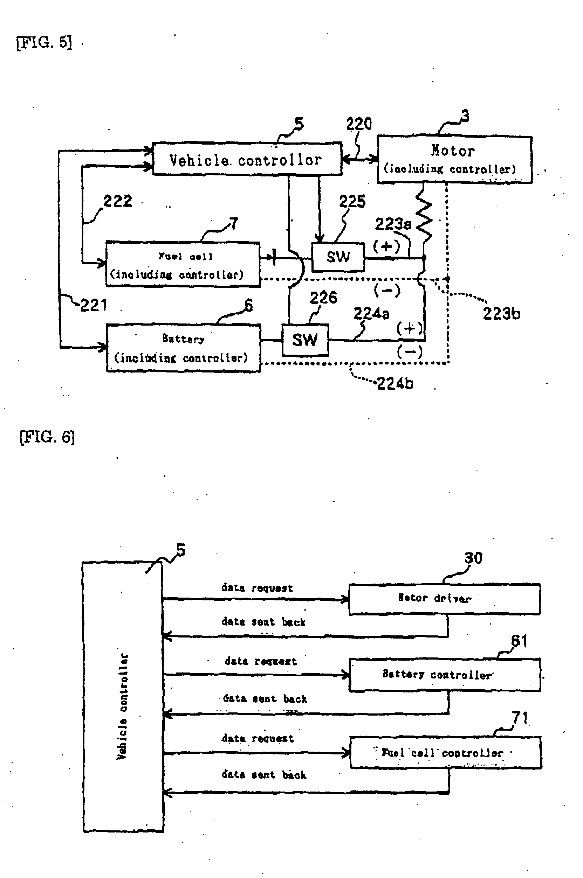

Fig. 5 is a block diagram of the power source control system of the hybrid-driven vehicle according to this invention.

The vehicle controller 5 is connected to the electric motor unit 3, battery unit 6 and fuel cell unit 7 through two-way communication lines 220, 221, 222, respectively. The fuel cell unit 7 is connected to the electric motor unit 3 through (+) side current line 223a and (-) side current line 223b. On the (+) side current line 223a is provided a switch 225. This switch 225 is turned ON and OFF by the vehicle controller 5.

The battery unit 6 is connected to the electric motor unit 3 through the (+) side current line 223a and the (-) side current line 223b which are directly connected to the (+) side current line 224a and (-) side current line 224b, respectively. On the (+) side current line 224a is provided a switch 226. This switch 226 is turned ON and OFF by the vehicle controller 5.

The electric motor unit 3 is a unit in which a motor driver 30, an encoder and sensors, as well as an electric motor 31 (Fig. 3), are integrated together as a module. Such an electric motor unit 3 can be mounted detachably on a vehicle as a unitary component. Therefore, the two-way communication line 220 and the current lines 223a, 223b, 224a, 224b are each adapted to connect the electric motor unit 3 and the vehicle controller through the respective couplers (not shown).

Detected data such as the operating conditions of the electric motor unit 3 (for example, number of revolution), throttle opening, running speed, request load, temperature and shift position are sent to the vehicle controller 5 to update the memory in the vehicle controller 5 for storage.

The battery unit 6 is a unit in which a battery controller 61, sensors S12-S14 and a relay 52, as well as a battery 60 as shown in Fig. 3, are integrated together as a module. Such a battery unit 6 can be mounted detachably on a vehicle as a unitary component. Therefore, the two-way communication line 221 and the current lines 224a, 224b are connected to the battery controller 61 of the battery unit 6 through couplers (not shown).

The battery controller 61 has a memory, to which are stored the data of the battery unit conditions such as temperature, voltage and current, and the remaining capacity of the battery 60 while updated constantly. Thus, the data can be transferred through two-way communication between the battery controller and the vehicle controller to supply required power during running, and when the battery 60 is replaced, the remaining capacity can be immediately recognized by the vehicle controller for processing of expected travel distance, etc.

The fuel cell unit 7 is a unit in which a fuel cell controller 71, sensors S21-S23 (Fig. 3) and a relay 52, as well as the fuel cell 70, reformer, etc, are integrated together as a module. Such a fuel cell unit 7 can be mounted detachably on a vehicle as a unitary component. Therefore, the two-way communication line 222 and the current lines 223a, 223b are connected to the fuel cell controller 71 of the fuel cell unit 7 through couplers (not shown).

The fuel cell controller 71 has a memory, to which are stored the data of the fuel cell unit conditions such as temperature, voltage and current, and the capacity (specifically, the remainder in the methanol tank) of the fuel cell while updated constantly. Thus, the data can be transferred through two-way communication between the fuel cell controller and the vehicle controller to supply required power during running, and processing of expected travel distance, etc can be performed.

Although in the embodiment in Fig. 5, a fuel cell and a battery are used for two power supply sources constituting the hybrid-driven vehicle, two fuel cells or two batteries (second batteries) may be used, or an engine type generator or a capacitor may be used. In addition, this invention can be applied to watercrafts or other equipment in addition to vehicles.

Fig. 6 is an illustration of data communication in the control system of the hybrid-driven vehicle according to this invention.

The vehicle controller 5 transmits, to the electric motor unit 3 (encoder 32 and other sensor group), battery controller 61 and fuel cell controller 71, request signals of various data stored in the memories of the controllers. Upon this data request, required data are sent back to the vehicle controller 5 from the sensor group of the electric motor unit 3, and the controllers 61, 71. The contents of the data include the state information such as temperature, voltage, current, error information and capacity, and the control information such as output request.

In this case, the vehicle controller 5 calculates, on the basis of the data from the sensor group and the controllers 61, 71, the optimum amount of drive to the units, and the data of the amount of drive are sent, as operation command data, to the motor driver 30 and controllers 61, 71 for the control of the electric motor unit 3, battery unit 6 and fuel cell unit 7.

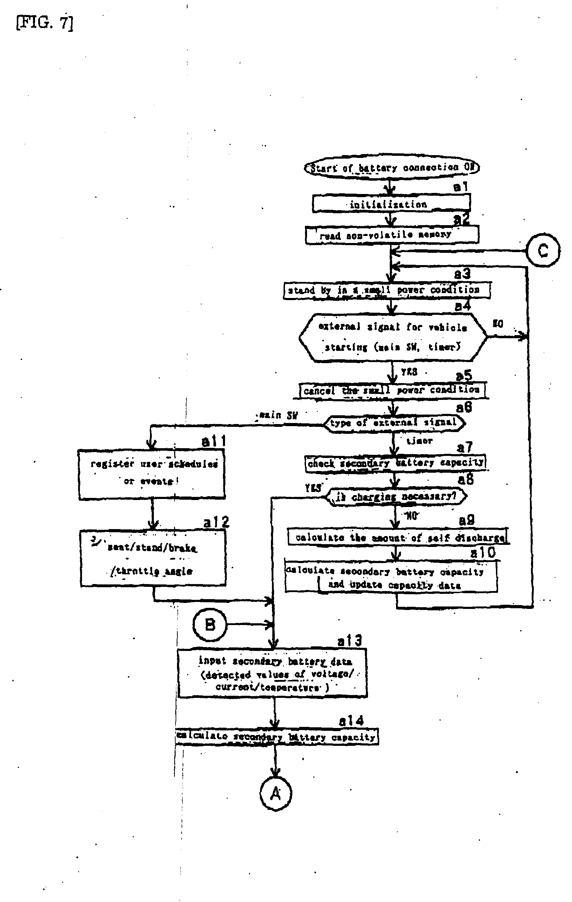

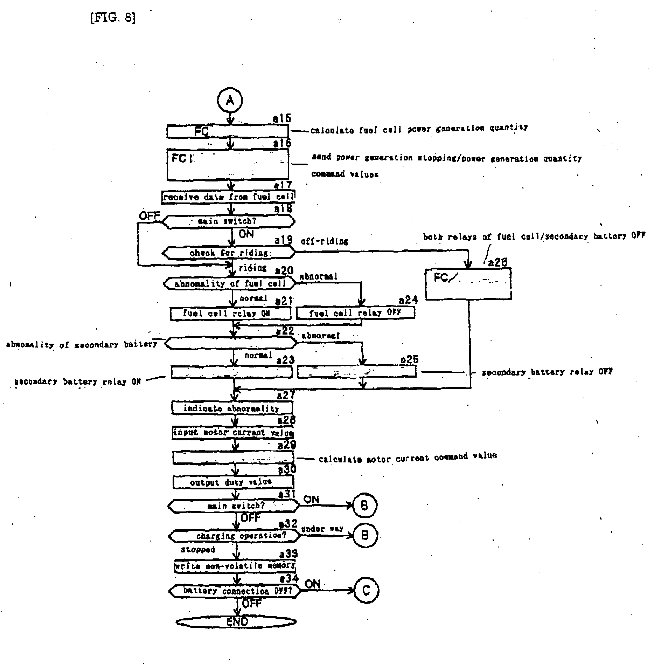

Fig. 7 and Fig. 8 are flowcharts of the control carried out by the vehicle controller 5.

The operation of each step is described below.

a1: Set various flags, motor duty data, etc at predetermined initial values.

a2: Read driving information of the motor-powered vehicle in the past from the non-volatile memory 27.

a3: Stand by in a condition where a weak current necessary for execution of the program, operation check of the main switch and check for a timer signal, flows through the system, that is, in a small power condition.

a4: Determine whether there exists a timer signal outputted at given time intervals (for example, every one hour) by the timer operated by the CPU on the battery side, or an ON-operating signal of the main switch mounted to the vehicle body.

a5: Cancel the small power condition of a3 if any external signal (timer signal or main switch signal of a4) exists.

a6: Determine the type of the external signal, and proceed to step a11 if the ON-operation signal exists, and to step a7 if the timer signal exists.

a7: Check the battery capacity data written in the RAM in the battery controller 61.

a8: Determine whether or not the secondary battery needs to be charged on the basis of the battery capacity data of a7.

a9: If no charging is necessary, calculate the amount of discharge from the battery.

a10: Update the battery capacity data in the RAM in the battery controller 61.

a11: Capture any written data of a schedule of the next riding.

a12: Capture a detection signal from each sensor. Capture any enforced fuel cell OFF-operation signal of the driver.

a13: Enter the data of detected signals, captured in a12, of voltage, current and temperature of the secondary battery.

a14: Calculate the capacity of the secondary battery after correction based on the input data.

a15: Calculate the command value of power generation of the fuel cell by using a map or a calculation formula based on the detected temperature data or capacity data on the battery side.

a16: send a power generation stopping command value or power generation quantity command value to the fuel cell.

a17: Receive data from the fuel cell. They are the data of the operating conditions (power generation quantity, temperature, output voltage and current, etc) of the fuel cell and the data of an abnormal flag which shows "1" when abnormality is detected in the operating conditions of the fuel cell.

a18: Determine whether the main switch is ON or OFF.

a19: Determine whether the vehicle is in the state of riding or off-riding. It is determined to be the state of riding when either ON-detection information of the seat switch or ON-detection information of the stand switch exists.

a20: Determine abnormality depending on whether the abnormal flag of the fuel cell is "1" or "0."

a21: Turn ON the relay if the fuel cell is in a normal condition.

a22: Check if the abnormal flag of the secondary battery which shows "1" at the time of abnormality, is "1" or "0," and determine whether or not the secondary battery is in a normal condition.

a23: Turn ON the relay if the secondary battery is in a normal condition.

a24: Turn OFF the relay if the fuel cell is in an abnormal condition.

a25: Turn OFF the relay if the secondary battery is in an abnormal condition.

a26: Turn OFF both relays of the fuel cell and the secondary battery if the vehicle is in the state of off-riding.

a27: Indicate the contents of abnormality on display in the meter panel.

a28: Enter a current value of the motor. The motor current value is set at zero during charging of the battery by the fuel cell in the state of main switch-OFF.

a29: Enter a motor current command value. The motor current command value is larger for a wider throttle angle of the throttle lever.

a30: Output the duty value of the motor. The duty value is a command value used for driving the motor and a function of the motor current command value, and shows qualitatively a larger value for a larger motor current command value.

a31: Determine whether the main switch is ON or OFF.

a32: Determine whether charging operation is under way or stopped. It is when the battery is in the state of full-charge and the relay is OFF due to abnormality on the battery or the fuel cell that the charging operation is stopped.

a33: Write the battery capacity in the non-volatile memory. This data is written at step a2.

a34: Determine whether the battery is ON or OFF. If the battery is ON, continue the program even when the vehicle is left with the main switch OFF to perform capacity control of the battery and charging control by the fuel cell.

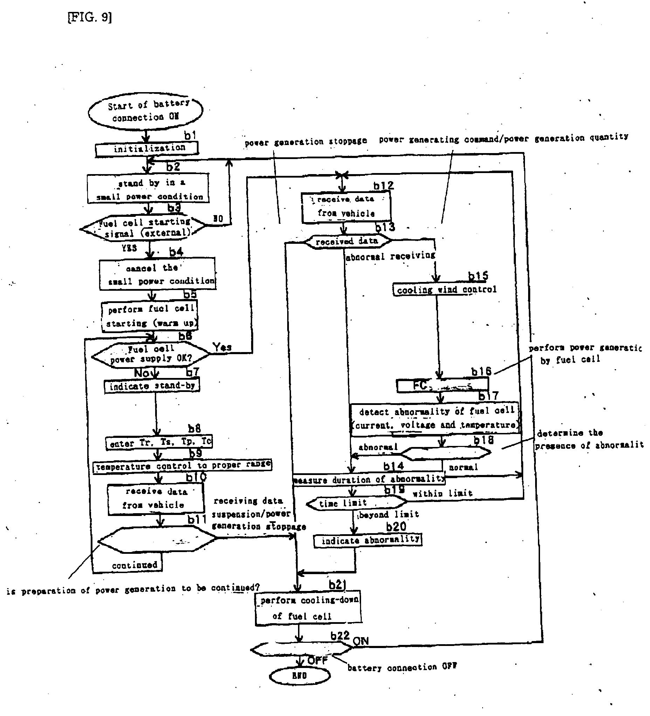

Fig. 9 is a flowchart of the operation control of the fuel cell.

The operation of each step is described below.

b1: Set various flags, etc at predetermined initial values.

b2: Stand by in a condition where a weak current necessary for execution of the program, operation check of the main switch and check for a timer signal, flows through the system, that is, in a small power condition.

b3: Determine whether or not an external starting signal from the vehicle controller for starting the fuel cell exists.

b4: Cancel the small power condition of b2 if any external signal exists.

b5: Perform starting processing (warm up) of the fuel cell. This is an operation which enables hydrogen gas supply mainly from the reformer.

b6: Determine whether or not the fuel cell is ready for electric power supply.

b7: Indicate to the driver on the display that the fuel cell is in the state of readiness.

b8: Enter temperature information detected by temperature sensors Tr, Ts, Tp, Tc of the respective portions of the fuel cell.

b9: Control the portions such that the temperature thereof falls in a proper range.

b10: Receive from the motor-driven vehicle a command data of whether or not preparation of power generation is to be continued.

b11: Determine from the received data whether or not preparation of power generation is to be continued. If determined to be continued, return to Step b6 and hold the state of readiness, If receiving data is stopped or power generation stopping command is received, proceed to Step b21.

b12: Receive from the motor-driven vehicle a command data of whether or not power generation is performed.

b13: Determine from the received data whether it is a data of power generation stoppage, data suspension or abnormal receiving due to noise, or a power generating command and a power generation quantity data.

b14: Measure the duration of the abnormal receiving or the abnormal condition of the fuel cell.

b15: Control the cooling wind by the fans 118, 119 (Fig. 4 and Fig. 9) if the power generating command is received.

b16: Perform power generation by the fuel cell.

b17: Write signals detected from the temperature sensor S21, pressure sensor S22 and current sensor S23.

b18: Determine whether or not the fuel cell is in an abnormal condition on the basis of the detected signals being written.

b19: Determine whether or not the duration of the abnormal condition exceeds a time limit value (for example, two sec).

b20: Indicate the abnormality if the duration of the abnormal condition exceeds the time limit value.

b21: Perform cooling-down after stopping the fuel cell.

b22: Determine whether or not the battery is to be OFF. If determined that the battery is to be OFF, cut off connection of the battery and stop operation. If determined that the battery is to be ON, return to Step b2 and repeat the procedure until the battery is turned OFF.

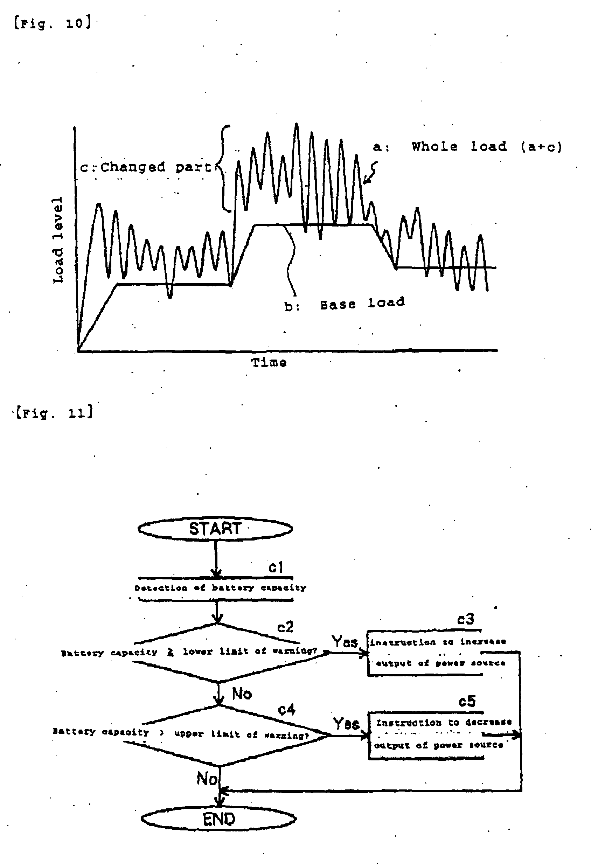

Fig.10 is a graph, illustrating burden ratios of a power source in a power source control method for a motor-powered vehicle according to an embodiment of the invention.

The drawing shows patterns of the load change for an electric motor of an motor-powered bicycle. Generally speaking, the term "load" is referred as the requested load inputted through a accelerator grip by a driver (for example, intention to accelerate speed or to maintain speed at an ascending slope, i.e. a request to the output of the electric motor from an driver) or referred as the external load applied on an electric motor from the external, such as air resistance and ascending or descending slope. The load described herein shall be the output to be provided by the electric motor. This output to be provided should be balanced with the external load and increased or decreased in response to the external load. In a lightweight vehicle such as a two-wheeled vehicle, external load is apt to change due to irregular road surfaces, the speed is also apt to vary corresponding to the output change, due to its lightweight, and the requested load is further apt to change when the driver intends to enjoy his driving.

In the drawing, symbol "a" denotes the whole load change and symbol "b" denotes part of the whole change, the load level of which is lower than that of the part "c" of the whole change, that is, symbol "b" denotes the load in the part substantially having no change of load (i.e. "base load" referred in this invention). In the invention, the electric power corresponding to the base load "b" is supplied from the fuel cell and the electric power corresponding to the load of change part "c" exceeding the base load is supplied from the battery. The load change "c" varies finely with time progress, but the base load is maintained at approximately constant value and the resultant change pattern is gradual. The base load "b" as the targeted value for the output of the fuel cell is determined depending on the load level. For example, it is determined as the given ratio to the average value of the changed loads. Also, the rate of the base load may be determined corresponding to operation modes or the like.

As the base load "b" which maintain at a constant value or changes gradually with the time progress, in response to the driving conditions is charged on the fuel cell, and the load change part "c" which has a level higher than the base load and varies finely is charged on the battery, the fuel cell having inactive response can follow the load change slowly during long time period and the battery ensures to follow the fine change part only, thereby to achieve a driving control in which superior characteristics of both power sources is fully put to practical use and to improve their responsiveness to the load. In this case, as the battery charges the changed load part "c" only, other than the base load "b" among the whole load "a," the burden on the battery is reduced, resulting in no abrupt application of load as well as no abrupt reduction of capacity. This causes no shortage of capacity during running and therefore the number of miles driven is secured. Furthermore, long life span is achieved as the deterioration is suppressed.

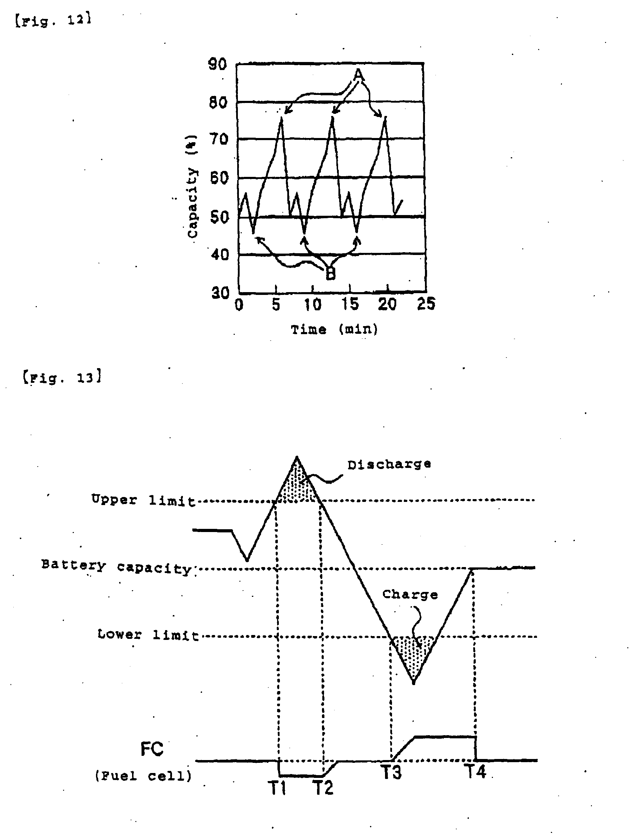

Fig.11 is a flow chart for the power source control method according to the invention and Fig.12 is a graph, showing the change of battery capacity in Fig.11.

For the battery capacity, if the electrical charge is incommensurate, the output becomes short and therefore the number of miles driven is not ensured with deterioration of the battery being accelerated. On the contrary, if the electrical charge is excessive, the battery is deteriorated due to overcharge or overcurrent caused by regenerative current. Accordingly, it is desired to maintain the battery capacity at the adequate level.

In this embodiment, as shown in Fig.11, first of all, the battery capacity is detected (Step c1). The detected battery capacity is discriminated whether larger or smaller than the lower limit of warning (Step c2). This lower limit of warning may be, for example, 50% of the maximum capacity. If the battery capacity is not more than the lower limit (50%) of warning (at the point B in Fig.12), then the instruction to increase the output of the fuel cell is sent (Step c3). In this step, the warning may be displayed though LED or the like. The increase of the output of the fuel cell causes the reduction of the burden loaded on the battery and therefore part of the increase of the output of the fuel cell charges the battery to increase the battery capacity.

In Step c3, if the battery capacity is not less than the lower limit of warning, then at Step c4 the battery capacity is discriminated whether larger or smaller than the upper limit of warning. This upper limit of warning may be, for example, 70% of the maximum capacity. If the battery capacity is not less than the upper limit of warning (at the point A in Fig.12), then the instruction for decreasing the output of the fuel cell is sent (Step c5). Also, in this step, the warning may be displayed though LED or the like. The decrease of the output of the fuel cell causes the increase of the burden loaded on the battery and therefore the battery discharge increases, resulting in the reduction of battery capacity.

If the battery capacity is between the upper limit and lower limit of warning, normal control of operation is performed according to the flow chart of the driving control program for a vehicle, as shown in Figs 7 and 8.

Thus, the battery capacity can be always maintained between the upper usage limit (for example 80%) and the lower usage limit (for example 40%) by comparing the battery charge with the upper limit (70%) of warning and the lower limit (50%) of warning and then controlling. As a result, the deterioration of battery is suppressed.

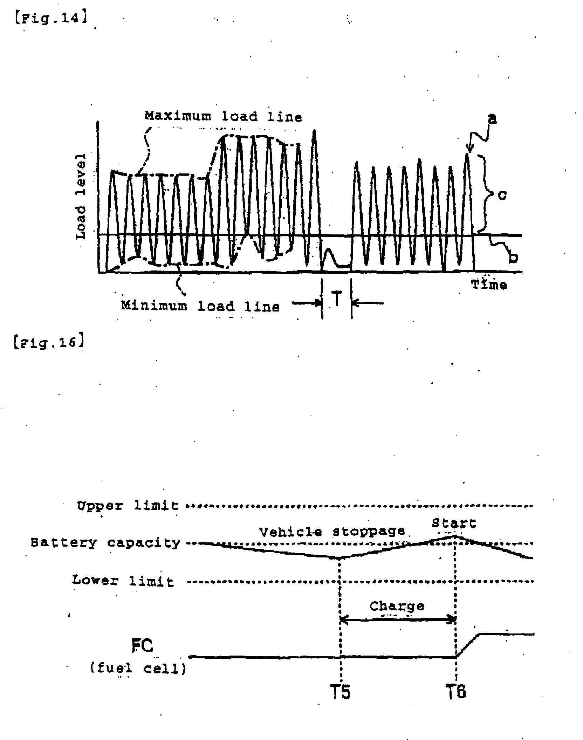

Fig. 13 is a graph, showing the change of battery capacity in the power source control method of the invention.

At the time T1, if the battery capacity is above the upper limit, the output of the fuel cell is reduced. As a result, the discharge from the battery increases and at the time T2 the capacity is reduced to the upper limit, where in turn the output of the fuel cell is increased again to return to the original value. In this state, normal driving is continued and then at the time T3 if the battery capacity is reduced under the lower limit, then the output of the battery is increased. This causes the discharge from the battery to stop and then the charging is performed. At the time T4, if the battery capacity achieves the predetermined level, the output of the fuel cell is returned to the original value and then the hybrid driving with the battery is performed according to the normal control program for driving.

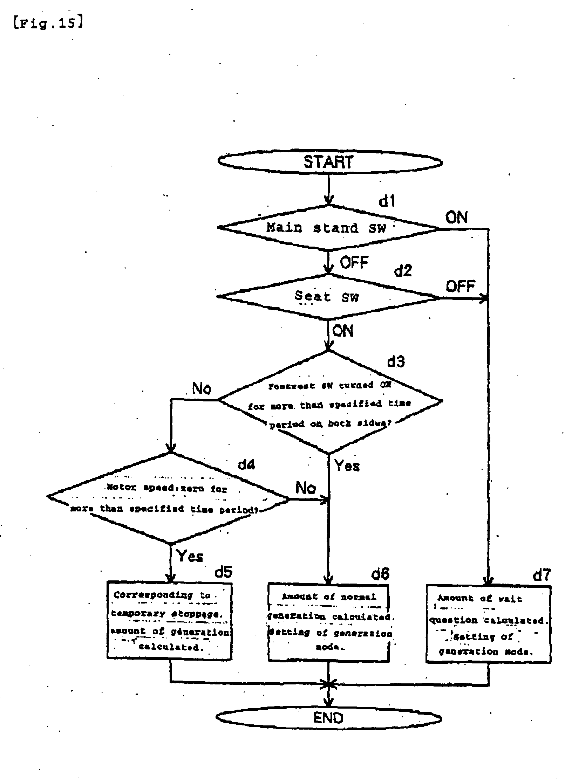

Fig.14 is a graph, showing patterns of load change according to another embodiment of the invention.

This embodiment is an example in which this invention is applied to a power-assisted bicycle having an electric motor, the power-assisted bicycle is one in which human power (out put) acting upon the pedals can be transmitted to a wheel by a power transmission such as a chain, the output of an electric motor is combined with the human power at any portion of the power transmission and the resulting force can be also transmitted to a wheel. The output of the electric motor shall be obtained by multiplying the pedaling force acting on pedals by a given positive coefficient. Therefore, the output (equal to the load) to be provided by the electric motor is correlated with the pedaling force. In pedaling operation using the driver's weight, the maximum pedaling force is limited by the driver's weight and the bottom value (minimum pedaling force) in each wave of varied pedaling force is approximately zero. Therefore, patterns of load change are shown in Fig.14.

Likely as in the example shown in Fig.10, the fuel cell charges a constant base load "b" and the battery charges the changed part "c" exceeding the load "b." The base load "b" is preset in each driving mode, based on the output of the known average load level of a normal motor-assisted bicycle. As the vehicle controller of this motor-assisted bicycle has learning function, the base load "b" may be set by calculating the average load level from the latest running data for every running mode according to effected by turning on the main switch, and correcting the base load "b" for every running.

When the vehicle is stopped for a short period due to, for example the waiting for traffic signals (time T in the drawing), the fuel cell continues to generate power without shut down fuel cell and as a result the battery is charged. Provided that the battery capacity is not more than the given upper limit. In such a manner that the fuel cell does operate during a short time stoppage of the bicycle, the warm-up time for restart is not required and stable output from the fuel cell can be obtained.

In a case that the base load shall be an envelope curve (maximum load line) formed of a line connecting peaks of varied waves, the battery is always charged. In another case that the base load shall be an median line between the maximum load line and a line connecting valleys of load waves, the battery charge is balanced with the battery discharge. It is desirable to make the base load constant as far as possible. Even if it cannot be made constant, it should be set such that the absolute of the differential value is smaller than that of changed load:

$$|db/dt| < |dc/dt| = |da/dt|$$

For example, the base load is set at least such that the wave has frequency higher than that changed load waves.

With this configuration, the fuel cell having responsiveness lower than that of the battery can also follow to generate. In the area where the changed load waves is larger than the base load "a," the battery is discharged and the area where it is smaller, it is charged.

Also, based on the capacity of a secondary battery, the base load "b" may be set larger than the median line if the capacity is less than the given value or further may be larger than the maximum load line. Similarly, based on the capacity of the secondary battery, it may be set smaller than the median line if the capacity is more than the given value or further may be smaller than the minimum load line.

Fig. 15 is a flow chart, showing a subroutine of generation control for determining a temporary stoppage and charging the battery.

First, at Step d1, the main stand switch (sensor 2) of the stand 20 (Fig.3) is determined whether it is in ON or OFF. If the stand is in use (ON), it is determined as the vehicle being in stoppage and the amount of generation is calculated according the stand by mode for next driving (Step d7). If the stand is not used (OFF), the seat switch (sensor 1) on the seat 8 is determined whether it is in ON or OFF (Step d2). If it is not seated (OFF), it is determined as the vehicle being in stoppage and the amount of generation is calculated according the stand by mode for next driving (Step d7).

If seated (ON), it is determined whether or not the right and left feet are on the right and left footrests for more than specified time period (Step d3). This is decided depending on the ON/OFF state of the right and left footrests. If both feet are on the footrest for more than specified time period, the vehicle is determined to be in stoppage, the amount of generation is calculated according to the normal running generation mode (Step d6).

If seated and the feet rest on the footrests ("NO" at Step d3), it is determined with the signal from an encoder, whether the speed of the motor 31 is zero (or not more than the specified speed) for more than specified time period (Step d4). If the speed is not less than the specified speed, it is determined that the vehicle is running (the vehicle is driven with the driver's foot is away from the footrests for the meantime and then the amount of generation is calculated according to the normal running generation mode (Step d6).

At Step d4, if the motor speed is zero (or not more than the specified speed) for the specified time period, it is determined as the temporary stoppage and then the amount of generation is calculated according to the temporary stoppage generation mode (Step d5).

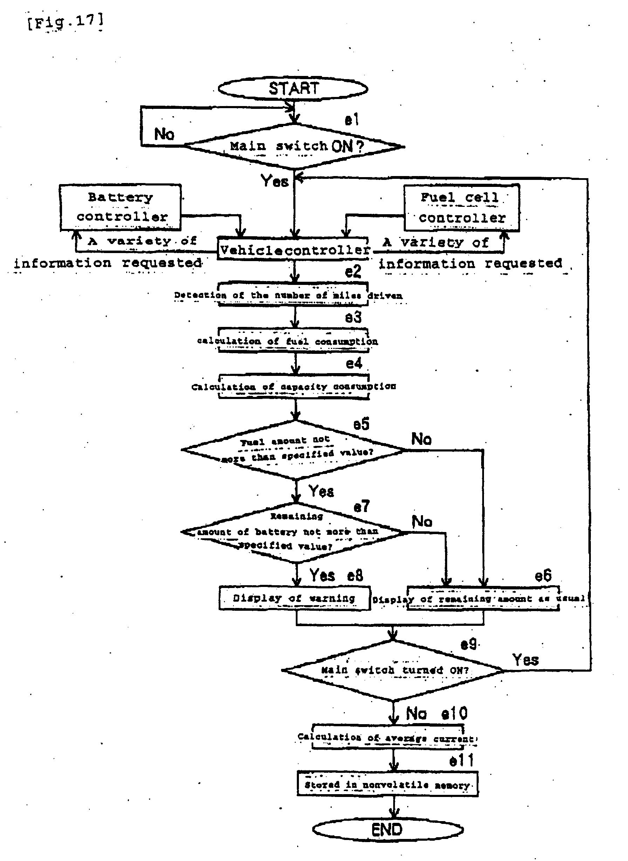

Fig.16 is a graph, showing the change of the battery capacity during temporary stoppage.

At the time T5, the temporary stoppage of the vehicle is detected and then the charge is initiated. During this temporary stoppage the battery capacity is gradually increased, and at T6, the vehicle is started. After the start, the battery capacity is gradually reduced. Additionally, against the acute increase of the load at start, the output of the fuel cell is also increased.

Fig. 17 is a flow chart of another embodiment of the invention.

This embodiment is a power source control method for controlling the output of the fuel cell, on the basis of the calculated average of the output current from means for storing the last running state.

The operation in each step is as follow:

Step e1: The main switch is determined whether ON or OFF. Only if it is ON, the following steps are performed. As described in Fig.6, the vehicle controller 5 transmits or receives a variety of data to or from the battery controller 61 and the fuel cell controller 71.

Step e2: The data of the mile number of driven from the start of running is taken in. The data is detected by a distance detection sensor located on the axle, then written in a RAM of the battery controller or the fuel cell controller, or in a RAM provided in the vehicle controller and read from them.

Step e3: The fuel consumption is calculated, based on the quantity consumed of methanol fuel from the start (the difference between the amount of methanol fuel remaining in the fuel tank at the start and the current amount of methanol fuel remaining in the fuel tank. This fuel consumption is used to calculate the expected number of miles driven for the fuel cell.

Step e4: The capacity consumption of the battery is calculated, based on the battery capacity reduction data (the difference between current battery capacity and the capacity at the start of running) and the data of the number of miles driven. This capacity consumption is used to calculate the expected number of miles driven for the fuel cell.

Alternatively, the expected number of miles driven may be obtained by obtaining the data for the capacity consumption of the whole vehicle, including the amount of fuel consumption and the amount of battery consumption and calculating the capacity consumption of the vehicle.

For example, if the consumption of the electric power supplier (fuel cell) is 100cc/Ah and the capacity consumption is 2.0 km/Ah, the expected number of miles driven in the case that the remaining amount of the fuel is 3,000 cc and the remaining battery capacity is 5.0 A/h is:

$$(3,000/100 + 5.0) \times 2.0 = 70 \text{ km}$$

Step e5: It is determined whether the amount of methanol fuel remaining in the fuel tank is not more than the specified value.

Step e6: If the amount of methanol fuel is more than the specified value, the display of remaining amount is displayed on a panel as usually.

Step e7: if the amount of methanol fuel is not more than the specified value, it is determined whether the remaining amount of the battery is not more than the specified value. If more than the specified value, then at Step e6, the display of remaining amount of the battery is displayed on a panel as usually, as well as that of the methanol fuel.

Step e8: if the remaining amounts of both the methanol fuel and the battery are not more than the specified values, respectively, the warning designations are displayed on the panel.

Step e9: It is determined whether the main switch is ON or OFF. If it is ON, the process returns to Step e2 and repeats the flow. If it is OFF, the process goes to Step e10.

Step e10: With the main switch OFF, the average current is calculated. This is performed by reading the data which is detected by a current sensor 23 for the fuel cell and stored in the memory of the fuel cell controller 71, and then calculating the average current between the time at the main switch turns ON and the present time, on the basis of the detected data.

Step e11: The average current calculated is stored in a nonvolatile memory. On the basis of the average current, the output of the fuel cell is set when the main switch is turned ON next time (for example, initial values and specified base loads, described above)

In this arrangement as described above, the fuel cell constantly bears a load of a given level as a base load portion, and the secondary battery (battery) bears a varying load portion exceeding the base load portion. Therefore, electric power is supplied from the fuel cell with constant stability for the base load portion which is constant with respect to time or varies slowly according to the operating mode, while electric power is supplied from the battery for the finely varying load portion exceeding the base load portion, thereby decreasing burden of the battery, preventing abrupt capacity drop or deterioration of the battery, and ensuring stable running by sharing the whole load efficiently between the fuel cell and the battery.

## Claims

1. A power source control method for a hybrid-driven mobile body comprising a motor type power system for travelling, and a fuel cell (70) and a secondary battery (60) as power sources for supplying electric power in response to load of said power system, **characterized in that** to a varying load, electric power corresponding to a base load portion at a given level and with a substantially small variation is supplied from the fuel cell (70) and electric power corresponding to a varying load portion is supplied from the secondary battery (60).

2. The power source control method for a hybrid-driven mobile body according to claim 1, wherein said base load portion is increased when the capacity of said secondary battery is smaller than a specified value, and said base load portion is decreased when said capacity is larger than a specified value.

3. The power source control method for a hybrid-driven mobile body according to claim 1 or 2, wherein electric power is supplied continuously from said fuel cell after stoppage of travelling until the secondary battery is recharged to a predetermined level.

4. The power source control method for a hybrid-driven mobile body according to at least one of the preceding claims 1 to 3, **characterized in that** a user is able to input various data into a vehicle controller (5) to change for example the operating characteristics of the vehicle.

5. The power source control method for a hybrid-driven mobile body according to claim 4, **characterized in that** the vehicle controller (5) controls a battery unit (6) having a battery (60) via a battery controller (61) and a battery relay (62), and controls the fuel cell unit (7) via a fuel cell controller (71) which in turn controls the fuel cell (70).

6. The power source control method for a hybrid-driven mobile body according to at least one of the preceding claims 1 to 5, **characterized in that** water used in the fuel cell (70) and water produced by power generation exchange heat with cooling air in a moisture collecting heat exchanger (107) and is returned to a water tank (108), and hydrogen used for power generation in the fuel cell (70) is returned to a burner (110) of a reformer (103).

7. The power source control method for a hybrid-driven mobile body according to at least one of the preceding claims 4 to 6, **characterized in that** the vehicle controller (5) communicates with an electric motor unit (3), battery unit (6) and a fuel cell unit (7) through two-way communication lines (220,221,222).

8. The power source control method for a hybrid-driven mobile body according to at least one of the preceding claims 4 to 7, **characterized in that** the vehicle controller (5) is updated with detected data such as the operating conditions of the electric motor unit (3).

9. The power source control method for a hybrid-driven mobile body according to at least one of the preceding claims 1 to 8, **characterized in that** the battery capacity is maintained between an upper usage limit, for example 80%, and a lower usage lever, for example 40%, by comparing the battery charge with an upper limit of warning and a lower limit of warning.

**10.** The power source control method for a hybrid-driven mobile body according to at least one of the preceding claims 1 to 9, **characterized in that** the hybrid drive mobile body is a motorcycle, a power assisted bicycle, a wheelchair, a water craft, etc.

[FIG. 1]

[FIG. 2]

(A)

5: Vehicle controller 6: Battery unit

8: Seat    15: Hydrogen supplying device

4: Transmission

7b: Fuel cell unit    3: Motor unit

(B)    15: Hydrogen    19: Reformer 13: Methanol tank
supplying device

16: Hydrogen pump

17: Fan    18: Burner

[FIG. 3]

[FIG. 4]

[FIG. 5]

[FIG. 6]

[FIG. 7]

[FIG. 8]

[FIG. 9]

[Fig. 10]

a: Whole load (a+c)

c: Changed part

b: Base load

Load level

Time

[Fig. 11]

START

c1 Detection of battery capacity

c2 Battery capacity ≦ lower limit of warning?  Yes → c3 Instruction to increase output of power source

No

c4 Battery capacity > upper limit of warning?  Yes → c5 Instruction to decrease output of power source

No

END

[Fig. 12]

[Fig. 13]

[Fig.14]

Maximum load line

Load level

Minimum load line

Time

T

a
c
b

[Fig.16]

Upper limit

Battery capacity

Lower limit

Vehicle stoppage    Start

Charge

FC
(fuel cell)

T5                    T6

23

[Fig.15]

[Fig.17]

```
                          ┌─────────────┐
                          │    START    │
                          └─────────────┘
                                 │
        ┌────────────────────────▼
        │ No          ╱──────────────╲  e1
        └────────────┤ Main switch ON? ├────
                      ╲──────────────╱
                            │ Yes
   ┌──────────────┐         ▼              ┌──────────────┐
   │   Battery    │                        │  Fuel cell   │
   │  controller  │                        │  controller  │
   └──────────────┘         │              └──────────────┘
   ↑ A variety of   ┌───────────────────┐   A variety of ↑
   information requested│ Vehicle controller │  information requested
                    └───────────────────┘
                            │  e2
              ┌─────────────────────────────┐
              │ Detection of the number of miles driven │
              └─────────────────────────────┘
                            │  e3
              ┌─────────────────────────────┐
              │ calculation of fuel consumption │
              └─────────────────────────────┘
                            │  e4
              ┌─────────────────────────────┐
              │ Calculation of capacity consumption │
              └─────────────────────────────┘
                            │
                  ╱──────────────────╲  e5
                 ┤ Fuel amount not      ├──── No
                  ╲ more than specified value? ╱
                    ╲──────────────╱
                            │ Yes
                  ╱──────────────────╲  e7
                 ┤ Remaining            ├──── No
              ── amount of battery not more than ──
                  ╲ specified value? ╱
                    ╲──────────────╱
                      │ Yes  e8
              ┌──────────────────┐  ┌────────────────────────────┐ e6
              │ Display of warning │  │ Display of remaining amount as usual │
              └──────────────────┘  └────────────────────────────┘
                            │
                  ╱──────────────────╲  e9
                 ┤ Main switch turned ON? ├──── Yes
                    ╲──────────────╱
                            │ No  e10
              ┌──────────────────────────┐
              │ Calculation of average current │
              └──────────────────────────┘
                            │  e11
              ┌──────────────────────────┐
              │ Stored in nonvolatile memory │
              └──────────────────────────┘
                            │
                          ┌───────┐
                          │  END  │
                          └───────┘
```